# EUROPÄISCHE PATENTSCHRIFT

(11) **EP 0 886 026 B1**
(45) Veröffentlichungstag und Bekanntmachung des Hinweises auf die Patenterteilung: **31.07.2002**
(21) Anmeldenummer: 98109927.8
(22) Anmeldetag: 30.05.1998
(51) Int. Cl.: E05D 15/52, E05C 9/06, B23P 19/04

(54) **Drehkipp-Beschlag-System**
Tilt and turn fitting system
Système de ferrure oscillo-battant

(30) Priorität: 17.06.1997 DE 19725627
(43) Veröffentlichungstag der Anmeldung: 23.12.1998
(73) Patentinhaber: Aug. Winkhaus GmbH & Co. KG, D-48291 Telgte (DE)
(72) Erfinder: Schenk, Hans-Peter, 48291 Telgte (DE); Renz, Dieter, 49479 Ibbenbüren (DE); Lau, Wolfgang, 48291 Telgte (DE)
(74) Vertreter: Hoffmeister, Helmut, Dr. Dipl.-Phys.

(56) Entgegenhaltungen:
- EP-A- 0 459 841
- DE-A- 4 417 818
- FR-A- 2 589 933

## Beschreibung

Die Erfindung betrifft ein Drehkipp-Beschlag-System mit
- wenigstens einer Eckumlenkung und
- verkettbaren Langteilen in unterschiedlichen Längen, die aus Stulpschiene, Treibstange und gegebenenfalls Funktionselementen, wie Riegelzapfen, Pilzkopfverriegelungen und dergleichen bestehen und die eine Greiferaufnahme- Konfiguration aufweisen.

Ein System der eingangs genannten Art ist aus der DE-A-4 417 818 bekannt. Bei der montageautomaten-unterstützten Montage werden die einheitlichen Eckumlenkungen auf die Ecken eines Flügelrahmens aufgesetzt und festgeschraubt. Die Langteile sind getrennt in kürzere und längere in einem Magazin gespeichert. Roboterarme nehmen beim Beschlagen eines Längsholms des Flügelrahmens ein längeres Langteil oder mehrere kürzere und Zusatzteile, wie ein Kantengetriebe, und bei einem Beschlagen eines Querholms des Flügelrahmens ein kürzeres Langteil aus dem Magazin und führen sie zu dem Flügelrahmen. Die Roboterarme weisen hierfür einen Unterarm mit einer in Längsrichtung verschiebbaren Halterung auf. An der Halterung ist ein Magnetkopf angeordnet. Schraubaggregate schrauben dann die jeweiligen Langteile an.

Voraussetzung für die Montage der langen Langteile und der zusammenzusetzenden kürzeren ist, daß sie der Länge des Querholms und des Längsholms des Flügelarms entsprechen. Ändern sich die Abmaße der Flügelholme, ist ein neues Magazin mit eingespeicherten Längsteilen zur Verfügung zu stellen. Diese je nach Flügelrahmen notwendigen unterschiedlichen Längen der Längsteile heben damit den Automatisierungseffekt auf, der durch den Einsatz der einheitlichen Eckumlenkungen entstanden ist.

Aus der DE-A-4 417 842 ein Drehkipp-Beschlag-System bekannt. Es umfaßt in eine Flügelfalz-Umfangsnut eines Flügelrahmens einsetzbare Eckumlenkungen jeweils aus einem Eckwinkel mit Stulpschienen-Kopplungselementen an beiden Winkelenden und einem am Eckwinkel beweglich gelagerten Kraftübertragungsglied mit Treibstangenkopplungselementen an beiden Gliedenden und Langteile aus Stulpschienenabschnitten und Treibstangenabschnitten und weiteren Details, die mit den Eckumlenkungen zu verketten sind. Die Eckumlenkungen sind einheitlich ausgebildet. Die Langteile sind fertig montiert, wobei Stulpschienen- und Treibstangenabschnitte einbaufähig zusammengesetzt sind.

Aus der EP-A-0 459 841 ist eine Maschine zum automatischen Montieren von Beschlagteilen bekannt, bei der die gelagerten

Teile automatisch aufgegriffen, zugeschnitten und je nach Lageposition an einem Fenster montiert werden. Das notwendige Anpassen der Beschlagteile an die jeweiligen Flügelabmessungen erfordert hierbei einen hohen Zuschneide- und Materialaufwand.

Es stellt sich demnach die Aufgabe, ein Drehkipp-Beschlag-System der eingangs genannten Art so weiter zu entwickeln, daß sich die Teile einfacher automatisch montieren lassen.

Erfindungsgemäß wird diese Aufgabe durch die Merkmale des Anspruchs 1 oder 2 gelöst.

Die mit der Erfindung erzielten Vorteile bestehen insbesondere darin, daß für die automatische Montage zu den einheitlichen Eckumlenkungen Langteile beigestellt werden, die über eine einheitliche Greiferaufnahme-Konfiguration verfügen.

Die Länge der Langteile ist hierbei variabel. Die einheitliche Greiferaufnahme-Konfiguration ermöglicht eine einheitliche Positionierung der einzelnen Langteile neben- und untereinander. Durch die einheitliche Greiferaufnahme-Konfiguration sind die Langteile, obwohl sie unterschiedliche Länge haben, von gleicher Konfiguration. Das Vorsehen wenigstens einer Ausnehmung in einem definierten Abstand gegenüber der Anschraubausnehmung stellt darüber ein weiteres Vereinheitlichungsmerkmal dar. Hierdurch wird gesichert, daß sämtliche Langteile in gleicher Art und Weise an dem jeweiligen Flügelarm zu befestigen sind.

Die Anschraubausnehmungen können zu beiden Seiten der Greiferaufnahme-Konfiguration angeordnet sein. Hierbei kann eine erste Anschraubausnehmung in einem ersten Anschraubabstand und eine zweite Anschraubausnehmung in einem zweiten Anschraubabstand zur einen und zur anderen Seite der Greiferaufnahme-Konfiguration angeordnet sein. Werden die derart weitergebildeten Langteile am Flügelrahmen montiert, erscheinen nicht nur dem Roboterarm die Langteile gleich, sondern auch einzusetzenden Schraubaggregaten, die unabhängig von den Holmlängen der einzelnen Fensterrahmen immer die gleichen mechanischen Montagehandlungen durchführen.

Es können weitere Anschraubausnehmungen jenseits der ersten und/oder zweiten Anschraubausnehmung zu der einen und/oder der anderen Seite der Greiferaufnahme-Konfiguration in jeweils weiteren festgelegten Anschraubabständen in die Langteile eingebracht werden. Diese zusätzlichen Anschraubausnehmungen werden in die Langteile gebracht, die mit ihrer Länge über wenigstens eine der weiteren festgelegten Anschraubabstände hinausgehen. Als vorteilhaft hat es sich erwiesen, in einem dritten Anschraubabstand eine dritte Anschraubausnehmung und in einer vierten Länge eine vierte Abstandsausnehmung in die Langteile einzubringen. Damit verfügen besonders lange Langteile außer der einheitlichen Greiferaufnahme-Konfiguration über vier in stets denselben definierten Abständen angeordnete Anschraubausnehmungen. Hierdurch wird die Montage auch dieser Langteile vereinfacht, so daß sich die positiven Effekte der automatischen Montage der Langteile mit dem positiven Effekt der automatischen Montage der einheitlichen Eckumlenkungen addieren.

Bei der Ausbildungsformen der Greiferaufnahme-Konfiguration mit den beiden Aufnahmeausnehmungen kann die erste Aufnahmeausnehmung und in einem Abstand zu dieser die zweite Aufnahmeausnehmung in jedes der Langteile angebracht sein. Hierbei kann die erste Aufnahmeausnehmung die eine Seite und die zweite Aufnahmeausnehmung die andere Seite der Greiferaufnahme-Konfiguration bilden. Die Aufnahmeausnehmungen stellen damit nicht nur Funktionselemente, sondern auch Bezugspunkte für die einheitlich eingebrachten Anschraubausnehmungen dar.

Um die Aufnahmeausnehmungen gegenüber den Anschraubausnehmungen, die als Anschraubsenklöcher ausgebildet sind, zu unterscheiden, können sie vieleckig, ellipsoid oder auch in einer anderen geometrischen Form ausgebildet sein. Als vorteilhaft hat es sich erwiesen, die Aufnahmeausnehmungen langlochförmig auszubilden. Durch das Gestalten der Greiferaufnahme-Konfiguration in Form von beabstandeten Langlöchern wird eine Ausbildungsform gewählt, die sich in die übliche maschinelle Bearbeitung der Längsteile eingliedert. Sie können ebenso wie die Anschraubausnehmungen durch Bohren oder Stanzen geformt werden. Eine zusätzliche Bearbeitungsart und daraus resultierend die Entstehung weiterer Kosten wird vermieden.

Bei der Ausführungsform der Greiferaufnahme-Konfiguration mit dem hervorstehenden Greiferaufnahme-Element kann dieses Greiferaufnahme-Element eine bestimmte Länge aufweisen, um den Aufnahmevorgang sicher ausführen zu können. Das Aufnahmeelement selbst kann dabei auf dem Langteil aufgesetzt sein.

Ein Ausführungsbeispiel der Erfindung ist in der Zeichnung dargestellt und wird im folgenden näher beschrieben. Es zei.gen in schematischer Darstellung:
- Fig. 1: Langteile eines Drehkipp-Beschlag-Systems, die in einem Langteil-Magazin eingespeichert sind,
- Fig. 2: Langteile gemäß Fig. 1 in einem vergrößerten Teilausschnitt,
- Fig. 3: ein mit Langteilen gemäß den Fig. 1 und 2 zu montierendes Drehkipp-Beschlag-Systems und Flügelrahmen unterschiedlicher Größe,
- Fig. 4: eine Eckumlenkungs-Anschlagsektion in einer Draufsicht,
- Fig. 5: eine Langteil-Anschlagsektion in einer Draufsicht
und
- Fig. 6: einen Auszug aus einer Anschlagsektion gemäß Fig. 5.

Ein Drehkipp-Beschlag-System für Flügelrahmen von Fenstern oder Türen umfaßt, wie bekannt, Langteile 2.1, ... 2.n und-Eckumlenkungen 1.1, ... 1.n.

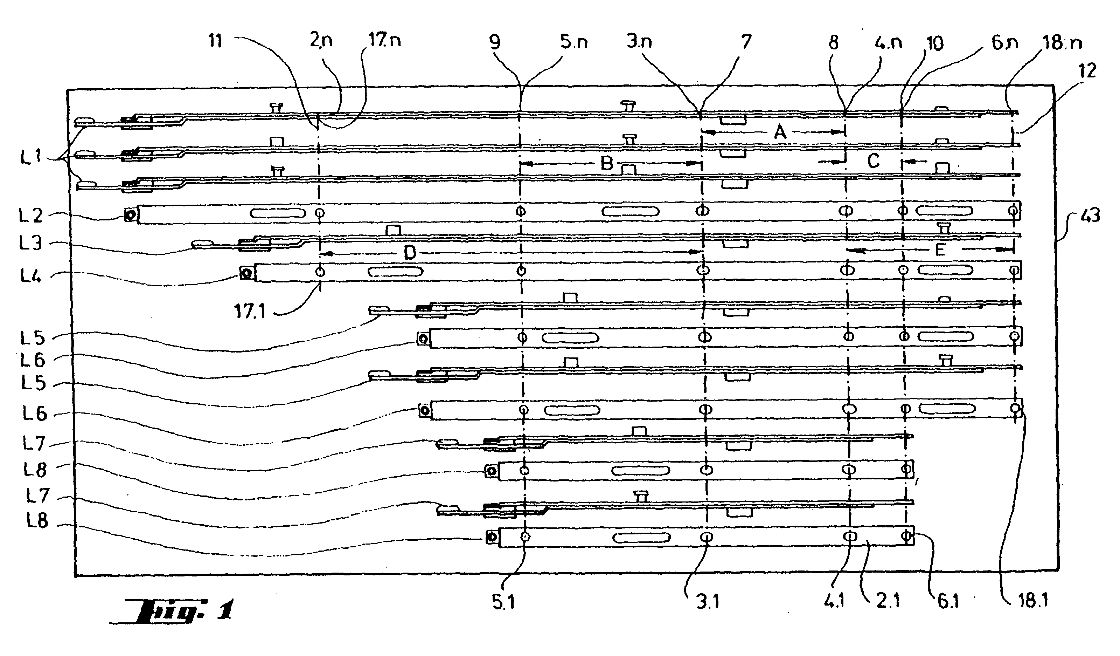

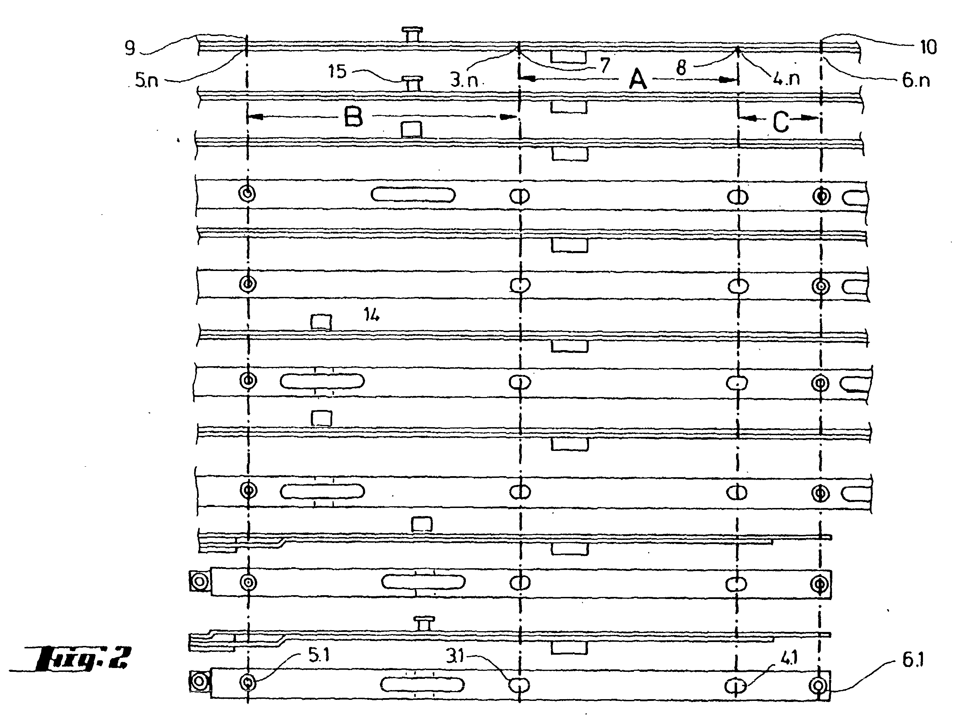

Die Langteile 2.1, ... 2.n (vgl. Fig. 1 und 2) bestehen aus Stulpschiene und Treibstange zur Ankopplung an jeweilige Stulpschienenenden bzw. Treibstangenenden an die Stulpschienenkopplungselemente bzw. Treibstangenkopplungselemente zweier zu verbindender Eckumlenkungen. Sie weisen, wie die Fig. 1 und 2 zeigen, darüber hinaus Riegelzapfen 14 und Pilzkopfverriegelungen 15 auf.

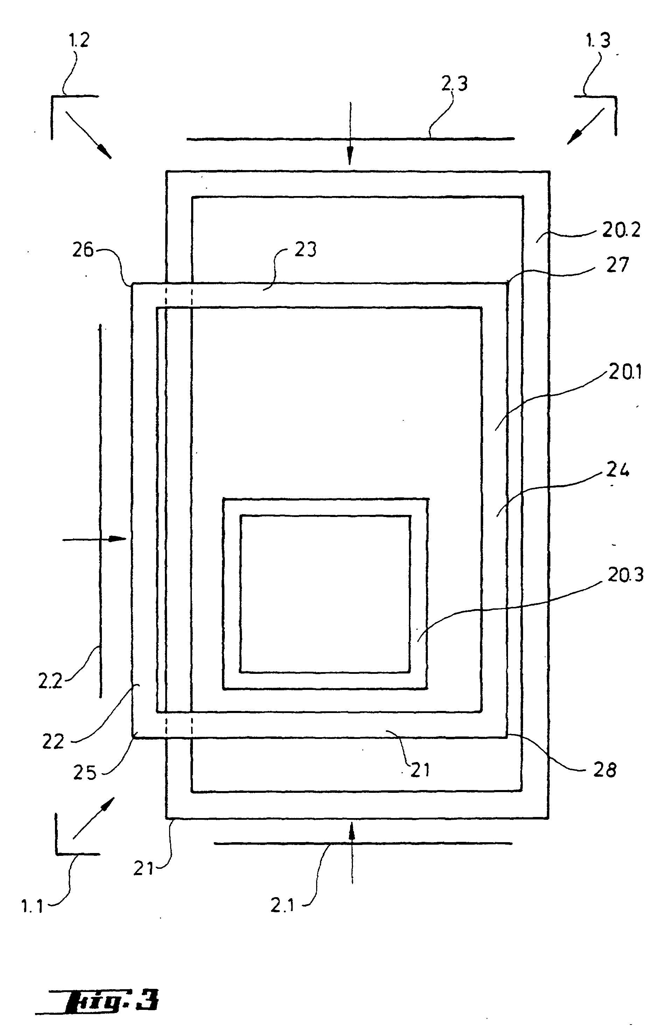

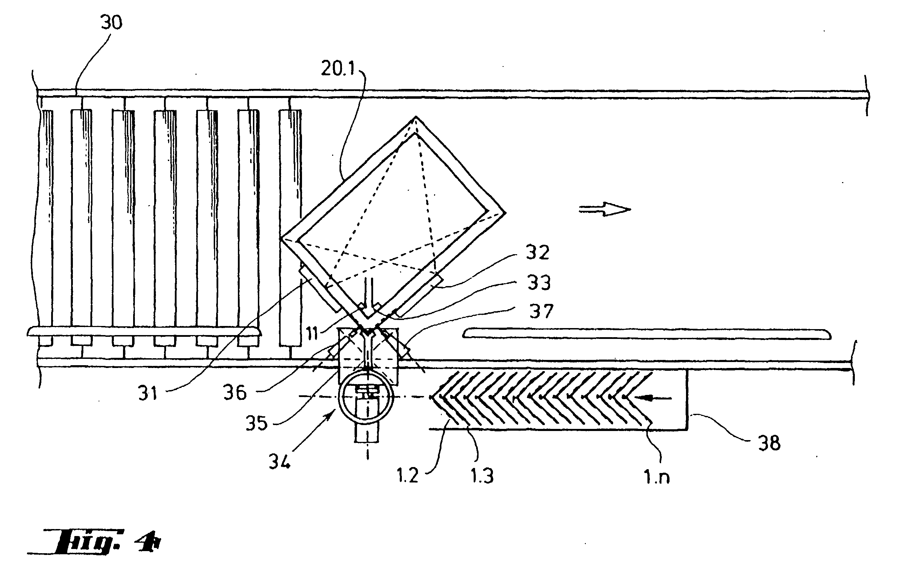

Die Eckumlenkungen 1.1, ... 1.n sind einheitlich für sämtliche Ecken unabhängig von der Profil- und Rahmengestaltung (vgl. Fig. 4) ausgebildet. Sie sind damit für die in Fig. 3 dargestellten Flügelrahmen 20.1, 20.2 und 20.3 gleichermaßen verwendbar. Die Eckumlenkungen umfassen einen Eckwinkel aus einem im rechten Winkel gebogenen Metallblech, ein Kraftübertragungsglied in besonderer Form zweier Federblechstreifen innerhalb eines C-profilförmigen Führungswinkels und zwei baugleiche Abschnittsteile an den beiden Enden des Eckwinkels zur Abstützung der Eckumlenkungen am Grund einer zweifach abgestuften Nut an der Falzumfangsfläche eines Flügelrahmens und Treibstangenankopplungselemente an den beiden Enden des Kraftübertragungsteils. Die vorgenannten Teile sind bekannt.

Jeder Flügelrahmen 20.1, 20.2 bzw. 20.3 setzt sich aus zwei Rahmenquerholmen 21 und 23 und zwei Rahmenlängsholmen 22 und 24 zusammen und verfügt über Rahmenecken 25, 26, 27, 28. Gegenüber dem Flügelrahmen 20.1 sind jedoch bei dem Flügelrahmen 20.2 die Rahmenlängs- und die Rahmenquerholme deutlich länger, während sie bei dem Flügelrahmen 20.3 wiederum deutlich kürzer ausgebildet sind. Fig. 3 zeigt , daß die einheitlichen Eckumlenkungen 1.1, ... 1.n sowohl an den Flügelrahmen 20.1 als auch an die Flügelrahmen 20.2 und 20.3 anbringbar sind, während die erforderlichen Langteile verschieden lang sein können.

Für eine automatische Montage der Langteile in Verbindung mit den Rahmen werden folgende Einheitlichkeitskriterien gemäß Erfindung festgelegt:

Jedes der Langteile 2.n, ... 2.1 mit den unterschiedlichen Längen L1, L2, L3, L4, L5, L6, L7 und L8 weist eine einheitliche Greiferaufnahme-Konfiguration und beidseitig zu dieser Greiferaufnahme-Konfiguration in einem Anschraubabstand B Anschraubausnehmungen 5.1, ... 5.n und in einem Anschraubabstand C Anschraubausnehmungen 6.1, ... 6.n auf, wie insbesondere Fig. 2 zeigt. Die Greiferaufnahme-Konfiguration ist ausgebildet von den Aufnahmeausnehmungen 3.1 und 4.1, 3.2 und 4.2, ... 3.n und 4.n, die in einem Greiferabstand A liegen. In ähnlicher Weise sind die Anschraubabstände B, C zwischen den Ausnehmungen 3.1 and 5.1, 3.2 und 5.2 usw. und 4.1 und 6.1, 4.2 und 6.2 usw. in einem bestimmten Abstand gehalten.

Unabhängig von der Länge L1, L2, ... der Langteile 2.n, 2.n-1 verfügen sie einheitlich über in einem gleichen Abstand angebrachte Aufnahmeausnehmungspaare 3.1 bis 4.1, 3.2 bis 4.2 sowie Paare von Anschraubausnehmungen 5.1 bis 6.1, 5.2 bis 6.2 usw.

Wie Fig. 1 zeigt, sind Langteile der Längen L1, L2, L3 und L4, vorhanden, die jenseits der Anschraubausnehmungen ... 5.n und ... 6.n noch Erstreckungen haben. In diese Langteile sind deshalb in einem Anschraubabstand D von den Aufnahmeausnehmungen ... 3n Anschraubausnehmungen 17.1, ... 17.n und auf der anderen Seite in einem Anschraubabstand E von den Aufnahmeausnehmungen ... 4.n Anschraubausnehmungen 18.1, ... 18.n vorhanden.

Die zu einem bestimmten Fenstertyp gehörenden Langteile 2.1, ... 2.n sind, wie Fig. 1 zeigt, in einem Langteil-Magazin 43 ausgerichtet untergebracht. Die Langteile 2.1, ... 2.n sind zur Kennzeichnung ihrer unterschiedlichen Ausbildung entweder sowohl in der Seiten- als auch in der Draufsicht dargestellt, obwohl sie in Wirklichkeit nur flach liegend vorhanden sind. Wie Fig. 1 deutlich macht, sind die Langteile so angeordnet, daß die Aufnahmeausnehmungen 3.1, ... 3.n in einer Aufnahmefluchtlinie 7 und die Aufnahmeausnehmungen 4.1, ... 4.n in einer Aufnahmefluchtlinie 8 liegen. Die Aufnahmefluchtlinien liegen mittig in den als Langloch ausgebildeten Ausnehmungen 3.1, ... 4.1, ... .

Die Anschraubausnehmungen 5.1, ... 5.n liegen ebenfalls ausgerichtet in einer Anschraubfluchtlinie 9, die Anschraubausnehmungen 6.1, ... 6.n in einer Anschraubfluchtlinie 10, die Anschraubausnehmungen 17.1, ... 17.n in einer Anschraubfluchtlinie 11 und die Anschraubausnehmungen 18.1, ... 18.n in einer Anschraubfluchtlinie 12.

Durch die Fluchtlinien 7, 8 wird damit ein einziger, für alle Langteile gleicher Greiferabstand A,
durch die Aufnahmefluchtlinie 7 und die Anschraubfluchtlinie 9 ein einziger gleicher Anschraubabstand B,
durch die Aufnahmefluchtlinie 8 und die Anschraubfluchtlinie 10 ein für alle Langteile gleicher Anschraubabstand C,
durch die Aufnahmefluchtlinie 7 und die Anschraubfluchtlinie 11 ein gleicher Anschraubabstand D und
durch die Aufnahmefluchtlinie 8 und die Anschraubfluchtlinie 12 ein für alle Langteile gleicher Anschraubabstand E exakt definiert.

Durch die in gleichem Greiferabstand A eingebrachten Aufnahmeausnehmungen 3.1, ... 3n und 4.1, ... 4n sowie den in gleichen Anschraubabständen B, C, D, E angeordneten Anschraubausnehmungen 5.1 bis 6.1, 17.1, 18.1 lassen sich die Langteile 2 trotz ihrer unterschiedlichen Längen L1, ... L8 in dem Langteil-Magazin 43 einordnen.

Die Durchführung einer automatischen Montage mit Hilfe des in dem dargestellten Ausführungsbeispiel beschriebenen Drehkipp-Beschlag-Systems sei anhand der Figuren 1 bis 6 erläutert.

Die Flügelrahmen 20.1, 20.2 bzw. 20.3 von Fenstern oder Türen werden heutzutage teilautomatisch oder vollautomatisch aus den entsprechendne Rahmenprofilen hergestellt. Häufig wird hierbei taktweise vorgegangen, wobei in einer Stufe beispielsweise die Kunststoff- oder Aluminiumholme des Flügelrahmens verschweißt werden und in der nachfolgenden Putzstufe die Schweißnähte egalisiert werden. Die Taktzeit liegt beispielsweise bei zwei Minuten.

Wie Fig. 3 zeigt, können die einheitlichen Eckumlenkungen 1.1, 1.2, 1.3 jeweils auf eine der Rahmenecken 25, 26, 27, 28 gesetzt werden.

Das Anbringen der Eckumlenkungen erfolgt in einer Eckumlenkungs-Anschlagsektion, wie sie in Fig. 4 dargestellt ist. Sie besteht aus einer Rollenbahn 30, einer Montageeinrichtung 34, der Leisten 31 und 32 sowie ein Spannkopf 33 zugeordnet sind, und einem Eckumleitungsmagazin 38, in dem die Eckumlenkungen 1.1, ... 1.n abgespeichert sind.

Über die Rollenbahn 30 wird der Flügelrahmen 20.1 zugeführt. Die Leisten 31, 32 erfassen den Flügelrahmen und drehen ihn in eine Position, in der, wie in Fig. 4 dargestellt, die Rahmenecke 25 gegenüber der Montageeinrichtung 34 positioniert wird. Der Spannkopf 33 sorgt für einen sicheren Halt des Flügelrahmens 20.1. Die Montageeinrichtung 34 hat vorher mit ihrem Montagekopf 35 aus dem Eckumleitungsmagazin 38 die eine Eckumleitung 1.1 entnommen. Die auf die Rahmenecke 25 aufgesetzte Eckumleitung 1.1 wird mit Hilfe von Schraubaggregaten 36 und 37 am Flügelrahmen 20.1 befestigt. In gleicher Art und Weise werden später die Rahmenecke 26 mit der Eckumlenkung 1.2 und die Rahmenecke 27 mit der Eckumleitung 1.3 beschlagen.

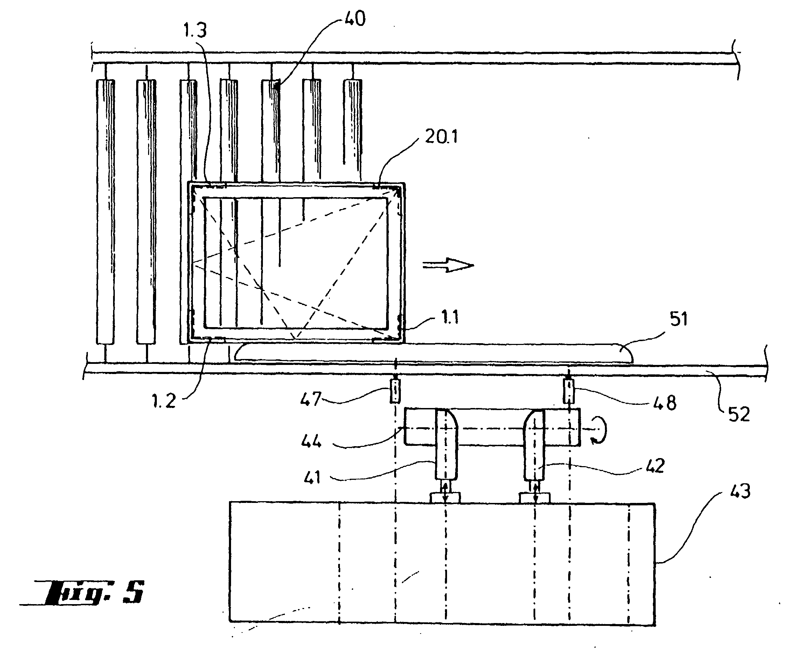

Anschließend wird der so vormontierte Rahmen 20.1 in eine Langteil-Anschlagsektion transportiert, wie sie in Fig. 5 gezeigt ist. Eckumlenkungs- und Langteil-Anschlagsektion können zur Erhöhung des Automatisierungseffekts auch zusammengefaßt werden. Aus Gründen der besseren Darstellung des Bauverfahrens erfolgt jedoch eine getrennte Beschreibung.

Die Langteil-Anschlagsektion besteht aus einer Rollbahn 40, auf der der mit Eckumleitungen versehene Flügelrahmen 20.1 zugeführt wird. Zur Rollbahn 40 gehören u.a. ein Führungselement 51 und eine Montageleiste 52. Der Montageleiste 52 gegenüberliegend sind beabstandet untereinander zwei Schraubendreher 47, 48 angeordnet. Diese arbeiten mit einem Roboterarm 44 zusammen, der über zwei Aufnahmestempel 41, 42 verfügt.

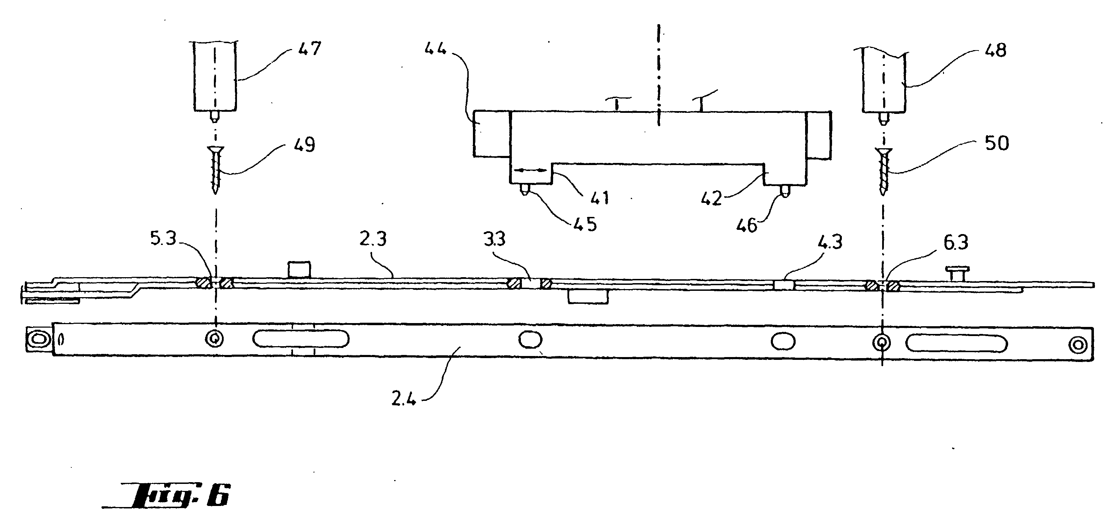

Diese weisen, wie Fig. 6 zeigt, jeweils einen Aufnahmedorn 45, 46 auf. Die Aufnahmedorne 45, 46 sind im Greiferabstand A zueinander positioniert, während die Schraubendreher 47, 48 untereinander im Abstand A (Greiferabstand) plus B (Anschraubabstand) und C (Anschraubabstand) beabstandet sind. Dem Roboterarm 44 gegenüberliegend ist das Langteil-Magazin 43 positioniert.

Die Kommissionierung der einzelnen Langteile 1.1, ... 1.n kann, wie in Fig. 1 gezeigt, nach den Längen L1, ... L8 erfolgen. Ein anderes Ordnungsprinzip wäre die zu erwartende Montagestellung an einem Rahmenquer- oder einem Rahmenlängsholm. Welche Vorkommissionierung gewählt wird, hängt von dem jeweiligen Roboter ab.

Um den Flügelrahmen 20.1 beschlagen zu können, greift deshalb der Roboterarm 44 auf das mit 2.3 bezeichnete Langteil zu. Hierbei werden die Aufnahmedorne 45, 46, wie Fig. 6 zeigt, in die Aufnahmeausnehmungen 3.3 und 3.4 geführt. Durch ein Auseinanderfahren der Aufnahmestempel 41 und 42 wird ein sicheres Ergreifen des Langteils 2.3 gewährleistet.

Durch eine Drehung um seine Längsachse führt der Roboterarm 44 das Langteil 2.3 in Richtung des Rahmenlängsholms 22. Ist das Langteil 2.3 angelegt, werden durch die Schraubendreher 47 und 48 Senkschrauben 49 und 50 in die Anschraubausnehmungen 5.3 und 6.3 geführt und das Langteil 2.3 befestigt. Hierbei führt der Roboter die Verbindung zwischen dem Langteil 2.3 und den Eckumlenkungen 1.1, und 1.2 durch.

In gleicher Art und Weise wird bei einem nächsten Rahmenlängsholm eines nächsten Flügelrahmens das Langteil 2.4 montiert.

Von besonderem Vorteil ist es, daß durch die Wahl einer einheitlichen Greiferaufnahme-Konfiguration 3.1, ... 3.n und 4.1 bzw. 4.n, ein Abstand A und die zu beiden Seiten dieser Greiferaufnahme-Konfiguration in gleichen Anschraubabständen B und C vorgesehenen Anschraubausnehmungen 5.1, ... 5.n und 6.1, ... 6.n Langteile unterschiedlicher Längen von ein und demselben Roboterarm aufgenommen und Flügelrahmen mit unterschiedlichen Holmlängen zugeführt werden und sofort positionsgerecht angeschraubt werden können. Die in weiteren definierten Anschraubabständen D, E positionierten Anschraubausnehmungen 17.1, ... 17.n und 18.1, ... 18.n erlauben ein positionsgerechtes Anschrauben von Langteilen, die wenigstens teilweise mit ihrer Länge L1, ... L8 über wenigstens eine dieser weiteren festgelegten Anschraubabstände D, E hinausgehen. Hierdurch wird der durch die einheitliche Gestaltung der Eckumleitungen erreichte Automatisierungseffekt um einen weiteren Automatisierungsschub erhöht.

## Patentansprüche

1. Drehkipp-Beschlag-System mit
- wenigstens einer Eckumlenkung (1.1, ... 1.n) und
- verkettbaren Langteilen (2.1, ... 2.n) in unterschiedlichen Längen (L1, ... L8), die aus Stulpschiene, Treibstange und gegebenenfalls Funktionselementen, wie Riegelzapfen, Pilzkopfverriegelungen und dergleichen bestehen und die eine Greiferaufnahme-Konfiguration (3.1, ... 3.n, 4.1, ... 4.n, A) aufweisen,
**dadurch gekennzeichnet,**
- **daß** alle Langteile (2.1, ... 2.n) eine einheitliche Greiferaufnahme-Konfiguration mit einer ersten und einer zweiten Aufnahmeausnehmung (3.1, ..., 3.n, 4.1, ..., 4.n) haben und
- **daß** in jedem der Langteile (2.1, ... 2.n) wenigstens eine Anschraubausnehmung (5.1, ... 5.n, 6.1, ... 6.n, 17.1, ... 17n, 18.1, ... 18.n) in einem definierten Abstand (B; C; D; E) zur Greiferaufnahme- Konfiguration (3.1, ... 3.n, 4.1, ... 4.n, A) angeordnet ist.

2. Drehkipp-Beschlag-System mit
- wenigstens einer Eckumlenkung (1.1, ... 1.n) und
- verkettbaren Langteilen (2.1, ... 2.n) in unterschiedlichen Längen (L1, ... L8), die aus Stulpschiene, Treibstange und gegebenenfalls Funktionselementen, wie Riegelzapfen, Pilzkopfverriegelungen und dergleichen bestehen und die eine Greiferaufnahme-Konfiguration aufweisen,
**dadurch gekennzeichnet,**
- **daß** alle Langteile (2.1, ... 2.n) eine einheitliche Greiferaufnahme-Konfiguration mit wenigstens einem hervorstehenden Greiferaufnahme-Element haben und
- **daß** in jedem der Langteile (2.1, ... 2.n) wenigstens eine Anschraubausnehmung (5.1, ... 5.n, 6.1, ... 6.n, 17.1, ... 17n, 18.1, ... 18.n) in einem definierten Abstand (B; C; D; E) zur Greiferaufnahme- Konfiguration angeordnet ist.

3. System nach Anspruch 1 oder 2, **dadurch gekennzeichnet, daß** in jedem der Langteile (2.1, ... 2.n) zu einer Seite der Greiferaufnahme-Konfiguration (3.1, ... 3.n, 4.1, ... 4.n, A) in einem ersten Anschraubabstand (B) eine erste Anschraubäusnehmung (5.1, ... 5.n) und zur anderen Seite in einem zweiten Anschraubabstand (C) eine zweite Anschraubausnehmung (2.1, ... 6.n) angeordnet ist.

4. System nach Anspruch 3, **dadurch gekennzeichnet, daß** weitere Anschraubausnehmungen (17.1, ... 17.n, 18.1, ... 18.n) jenseits der ersten und/oder zweiten Anschraubausnehmung (5.1, ... 5.n, 6.1, ... 6.n) zu der einen und/oder anderen Seite der Greiferaufnahme-Konfiguration (3.1, ... 3.n, 4.1, ... 4n, A) in jeweils weiteren festgelegten Anschraubabständen (B; C) in die Langteile (2.1, ... 2.n) einzubringen sind, die wenigstens teilweise mit ihrer Länge (L1, ... Ln) über wenigstens einen der weiteren festgelegten Anschraubabstände (D; E) hinausgehen.

5. System nach einem der Ansprüche 1, 3 und 4 , **dadurch gekennzeichnet, daß** die erste Aufnahmeausnehmung (3.1, ... 3.n), die die eine Seite der Greiferaufnahme-Konfiguration bildet, und die zweite Aufnahmeausnehmung (4.1, ... 4n), die die andere Seite der Greiferaufnahme-Konfiguration bildet, in einer Greiferabstandslänge (A) in jedes der Langteile (2.1, ... 2.n) eingebracht sind.

6. System nach einem der Ansprüche 1, 3 bis 5, **dadurch gekennzeichnet, daß** die Aufnahmeausnehmung (3.1, ... 3.n, 4.1, ... 4.n) viereckig, ellipsoid oder langlochförmig ausgebildet ist.

7. System nach einem der Ansprüche 2 bis 4 und 7 **dadurch gekennzeichnet, daß** das Greiferaufnahme-Element auf dem Langteil (2.1, ... 2.n) aufgesetzt ist.

## Claims

1. A turn-tilt fitting system comprising
- at least one corner guide (1.1, ... 1.n and
- linkable longitudinal parts (2.1, ... 2.n) of varying lengths (L1, ... L8) comprising a faceplate, positioning bar and any required functional elements such as locking pins, mushroom locking means or the like and having a gripper-receiving configuration (3.1, ... 3.n, 4.1, ... 4.n, A),
**characterised in that**
- all longitudinal parts (2.1, ... 2.n) have a uniform gripper-receiving configuration comprising a first and a second receiving recess (3.1, ... 3.n, 4.1, ... 4.n) and
- at least one screwing recess (5.1, ... 5.n, 6.1, ... 6.n, 17.1, ... 17.n, 18.1, ... 18.n) is formed in each longitudinal part (2.1, ... 2.n) at a defined distance (B; C; D; E) from the gripper-receiving configuration (3.1, ... 3.n, 4.1, ... 4.n, A) .

2. A turn-tilt fitting system comprising
- at least one corner guide (1.1, ... 1.n and
- linkable longitudinal parts (2.1, ... 2.n) of varying lengths (L1, ... L8) comprising a faceplate, positioning bar and any required functional element such as locking pins, mushroom locking means or the like and having a gripper-receiving configuration,
**characterised in that**
- all the longitudinal parts (2.1, ... 2.n) have a uniform gripper-receiving configuration comprising at least one projecting gripper-receiving element and
- in each of the longitudinal parts (2.1, ... 2.n) at least one screwing recess (5.1, ... 5.n, 6.1, ... 6.n, 17.1, ... 17.n, 18.1, ... 18.n) is formed at a defined distance (B; C; D; E) from the gripper-receiving configuration.

3. A system according to claim 1 or 2,
**characterised in that** in each of the longitudinal parts (2.1, ... 2.n) a first screwing recess (5.1, ... 5.n) is disposed at one side of the gripper-receiving configuration (3.1, ... 3.n, 4.1, ... 4.n, A) at a first spacing (B) and a second screwing recess (6.1, ... 6.n) is disposed on the other side at a second spacing (C).

4. A system according to claim 3, **characterised in that** other screwing recesses (17.1, ... 17.n, 18.1, ... 18.n) beyond the first and/orsecond screwing recess (5.1, ... 5.n, 6.1, ... 6.n) are formed on one and/or the other side of the gripper-receiving configuration (3.1, ... 3.n, 4.1, ... 4.n, A) at respective other fixed spacings (B; C) in the longitudinal parts (2.1, ... 2.n) and at least partly project longitudinally (L1, ... Ln) beyond at least one of the other fixed screwing spacings (D; E).

5. A system according to any of claims 1, 3 or 4, **characterised in that** the first screwing recess (3.1, ... 3.n), which forms one side of the gripper-receiving configuration, and the second screwing recess (4.1, ... 4.n), which forms the other side of the gripper-receiving configuration, are disposed at a gripper spacing length (A) in each of the longitudinal parts (2.1, ... 2.n).

6. A system according to any of claims 1, 3 or 5, **characterised in that** the receiving recess (3.1, ... 3.n, 4.1, ... 4.n) is quadrilateral, elliptical or in the form of a slot.

7. A system according to any of claims 2 to 4 or 7, **characterised in that** the gripper-receiving element is mounted on the longitudinal part (2.1, ... 2.n).

## Revendications

1. Système de ferrure oscillo-battant qui comprend:
- au moins un coude de coin (1.1, ... 1.n) et
- des éléments longs (2.1, ... 2.n) de longueurs différentes (L1, ... L8) qui peuvent être reliés, qui se composent de rails emboutis, de bielles et éventuellement d'éléments fonctionnels comme des boulons de verrouillage, des verrouillages en forme de champignons et similaires et qui présentent une configuration (3.1, ... 3.n, 4.1, ... 4.n, A) de réception de pince de robot, simplement dit de pince dans ce qui suit,
**caractérisé en ce que**
- la configuration de réception de pince de tous les éléments longs (2.1, ... 2.n) est standardisée et comporte un premier et un deuxième évidements (3.1, ..., 3.n, 4.1, ... 4.n) de réception et **en ce que**
- au moins un évidement de vissage (5.1, ... 5.n, 6.1, ... 6.n, 17.1, ... 17.n, 18.1, ... 18.n) est agencé dans chacun des éléments longs (2.1, ... 2.n) à une distance définie (B; C; D; E) de la configuration (3.1, ... 3.n, 4.1, ... 4.n, A) de réception de pince.

2. Système de ferrure oscillo-battant qui comprend:
- au moins un coude de coin (1.1, ... 1.n) et
- des éléments longs (2.1, ... 2.n) de longueurs différentes (L1, ... L8) qui peuvent être reliés, qui se composent de rails emboutis, de bielles et éventuellement d'éléments fonctionnels comme des boulons de verrouillage, des verrouillages en forme de champignons et similaires et qui présentent une configuration de réception de piece,
**caractérisé en ce que**
- la configuration de réception de pince de tous les éléments longs (2.1, ... 2.n) est standardisée et comporte au moins un élément de réception de pince en saillie et **en ce que**
- au moins un évidement de vissage (5.1, ... 5.n, 6.1, ... 6.n, 17.1, ... 17.n, 18.1, ... 18.n) est agencé dans chacun des éléments longs (2.1, ... 2.n) à une distance définie (B; C; D; E) de la configuration de réception de pince.

3. Système selon la revendication 1 ou 2, **caractérisé en ce que** chacun des éléments longs (2.1, ... 2.n) comporte sur un premier côté de la configuration (3.1, ... 3.n, 4.1, ... 4.n, A) de réception de pince un premier évidement de vissage (5.1, ... 5.n) à une première distance de vissage (B) et un deuxième évidement de vissage (6.1, ... 6.n) sur l'autre côté à une deuxième distance de vissage (C).

4. Système selon la revendication 3 **caractérisé en ce que** d'autres évidements de vissage (17.1, ... 17.n, 18.1, ... 18.n) qui se prolongent au moins partiellement par leur longueur (L1, ... Ln) au-delà d'au moins l'une des autres distances de vissage fixées (D; E) doivent être ménagés dans les éléments longs (2.1, ... 2.n) au-delà du premier et/ou du deuxième évidements de vissage (5.1, ... 5.n, 6.1, ... 6.n) sur l'un et/ou l'autre côté de la configuration (3.1, ... 3.n, 4.1, ... 4.n, A) de la configuration de réception de pince.

5. Système selon l'une quelconque des revendications 1, 3 et 4, **caractérisé en ce que** le premier évidement de réception (3.1, ... 3.n) qui forme le premier côté de la configuration de réception de pince et le deuxième évidement de réception (4.1, ... 4.n) qui forme l'autre côté de la configuration de réception de pince sont ménagés à une longueur de distance (A) de pince dans chacun des éléments longs (2.1, .. 2.n).

6. Système selon l'une quelconque des revendications 1 et 3 à 5, **caractérisé en ce que** la configuration de l'évidement de réception (3.1, ... 3.n, 4.1, ... 4.n) est rectangulaire, ellipsoïdale ou en forme d'orifice allongé.

7. Système selon l'une quelconque des revendications 2 à 4 et 6, **caractérisé en ce que** l'élément de réception de pince est monté sur l'élément long (2.1, ... 2.n).
